(19) Europäisches Patentamt
European Patent Office
Office européen des brevets

(11) **EP 2 801 586 B1**

(12) **EUROPÄISCHE PATENTSCHRIFT**

(45) Veröffentlichungstag und Bekanntmachung des Hinweises auf die Patenterteilung:
**13.04.2016   Patentblatt 2016/15**

(51) Int Cl.:
*G02B 1/04* *(2006.01)*      *C08G 18/38* *(2006.01)*
*C08G 18/72* *(2006.01)*      *C08G 18/75* *(2006.01)*

(21) Anmeldenummer: **13166858.4**

(22) Anmeldetag: **07.05.2013**

(54) **Gießharz auf Polythiourethanbasis mit hoher Bruchfestigkeit und niedrigem spezifischen Gewicht**

Casting resin on a polythiourethane basis with high tensile strength and low specific weight

Résine de coulée à base de polythiouréthane dotée d'une résistance supérieure à la rupture et d'un faible poids spécifique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.11.2014   Patentblatt 2014/46**

(73) Patentinhaber: **Bruno Bock Chemische Fabrik GmbH & Co. KG**
**21436 Marschacht (DE)**

(72) Erfinder:
• **Schlatter, Elvira**
**21436 Marschacht (DE)**
• **Schmidt, Detlef**
**21436 Marschacht (DE)**
• **Rehfeld, Matthias**
**21436 Marschacht (DE)**

• **Ebmeyer, Frank**
**21436 Marschacht (DE)**

(74) Vertreter: **Kossak, Sabine et al**
**Harmsen - Utescher**
**Rechtsanwälte - Patentanwälte**
**Neuer Wall 80**
**20354 Hamburg (DE)**

(56) Entgegenhaltungen:
**EP-A1- 2 246 378      WO-A1-98/29766**
**US-A- 4 689 387**

Bemerkungen:
Die Akte enthält technische Angaben, die nach dem Eingang der Anmeldung eingereicht wurden und die nicht in dieser Patentschrift enthalten sind.

**Beschreibung**

Gegenstand der Erfindung ist ein Verfahren zur Herstellung eines Polyurethangießharzes, wobei die Herstellung in einem einstufigen Prozess die Schritte Mischen mindestens einer Thiolkomponente mit mindestens einer Isocyanatkomponente, Entgasung der Mischung und Aushärten des Polyurethanpolymers umfasst.

Für eine Reihe von Anwendungen, beispielsweise als Gießharze/Vergussmassen für elektronische oder optoelektronische Bauteile oder die Herstellung optischer Linsen besteht ein zunehmender Bedarf an Polythiourethanmassen mit sehr guten optischen und mechanischen Eigenschaften. Die Herstellung von Vergussmassen auf Polythiourethanbasis mit sehr guten optischen Eigenschaften ist grundsätzlich bekannt. Sie erfolgt üblicherweise durch Umsetzung von Isocyanaten mit Polyolen, Polythiolen und Aminen. Dabei werden die Eigenschaften der Vergussmassen meist durch Verwendung von besonderen, eigens synthetisierten Spezialverbindungen z.B. speziellen Isocyanaten oder Thiolen optimiert.

EP 0 378 895 B1 und EP 0 422 836 B1 beschreiben solche Formmassen und verwenden zur Erzielung guter optischer Eigenschaften wie z.B. eines hohen Brechungsindexes und einer geringen optischen Dispersion sowie einer guten Wärmeformbeständigkeit spezielle Isocyanate wie z.B. Norbornandiisocyanat (NBDI). Diese sind im Markt nur sehr begrenzt und kommerziell nicht zu konkurrenzfähigen Preisen verfügbar.

US 2009/0225425 A1 beschreibt Vergussmassen, die eine hohe Bruchfestigkeit aufweisen, insbesondere im FDA Drop Ball Test. Die Gießharze haben allerdings den Nachteil eines niedrigen Brechungsindex, der nicht im Anforderungsbereich liegt. Beschriebene Gießharze mit einem höheren Brechungsindex im Anforderungsbereich weisen nicht die geforderte Bruchfestigkeit nach dem FDA Drop Ball Test auf. Es ist daher mit den beschriebenen Vergussmassen nur möglich, die optischen Eigenschaften zu Lasten der Bruchfestigkeit zu optimieren.

EP 1 448 651 B1 beschreibt Polymere mit guten optischen Eigenschaften, sowie hoher Bruchfestigkeit. Erreicht wird dieses Ziel dadurch, dass schwefelhaltige Prepolymere vom Oligoharnstofftyp hergestellt werden und diese mit Aminen, Polyolen oder Polythiolen ausgehärtet werden. Die schwefelhaltigen Prepolymere müssen auf Basis von kommerziell verfügbaren Isocyanaten, Polythiolen und Aminen aufwändig in einer mehrstufigen Synthese aufgebaut werden.

WO 98/29766 offenbart Giessharze auf Polythiorethanbasis, erhältlich durch Umsetzung eines Polyisocyanats wie und eines oder mehrerer Polythiole. Unter anderem wird Ethan-1,2-dithiol as Polythiol eingesetzt, jedoch in geringen Mengen von weniger als 5 Gew.-%. WO 98/29766 hebt die optischen Eigenschaften der erhaltenen Polythiourethane hervor, liefert aber keine Hinweise hinsichtlich deren mechanischer Stabilität.

Die Aufgabe besteht erfindungsgemäß darin, Gießharze auf Polythiourethanbasis bereit zu stellen, die die vorgenannten Nachteile nicht aufweisen und insbesondere einfach und kostengünstig hergestellt werden können, besonders ohne Einsatz von teuren oder kommerziell nicht verfügbaren Spezialchemikalien und die eine hohe Bruchfestigkeit, einen hohen Brechungsindex, eine niedrige optische Dispersion bei gleichzeitig geringem spezifischen Gewicht aufweisen. Die erfindungsgemäßen Gießharze sollen somit gute optische Eigenschaften aufweisen, ohne dass hierdurch Bruchfestigkeit und spezifisches Gewicht beeinträchtigt werden.

Die Aufgabe wird erfindungsgemäß gelöst durch ein Verfahren zur Herstellung eines Polyurethangießharzes, wobei die Herstellung in einem einstufigen Prozess erfolgt und die Schritte umfasst:

    a) Mischen mindestens einer Thiolkomponente (A) mit mindestens einer Isocyanatkomponente (B),

    b) Entgasung der Mischung und

    c) Aushärten des Polyurethanpolymers,

dadurch gekennzeichnet, dass
die Thiolkomponente (A) mindestens ein Dithiol nach Formel (I)

$$HS-[CH_2CH_2-S]_x-CH_2CH_2-SH \qquad (I)$$

mit x = 0 - 5 enthält und
die Isocyanatkomponente (B) ein Diisocyanat ausgewählt aus der Gruppe bestehend aus Isophorondiisocyanat, Dicyclohexylmethandiisocyanat, Hexamethylendiisocyanat, Trimethylhexamethylendiisocyanat, Toluendiisocyanat, $\alpha.\alpha,\alpha',\alpha'$-Tetramethyl-xylylendiisocyanat, Xylylendiisocyanat oder eine Mischung hiervon ist.

Weitere Ausführungsformen sind Gegenstand der Unteransprüche oder nachfolgend beschrieben.

Erfindungsgemäß wird als Thiolkomponente (A) ein oder mehrere Dithiole nach Formel (I) verwendet, besonders bevorzugt Ethan-1,2-dithiol mit x = 0, 2,2'-Dimercaptodiethylsulfid mit x = 1, 1,11-Dimercapto-3,6,9-trithiaundecan mit x = 5 oder eine Mischung hiervon. Das Dithiol gemäß Formel (I) ist zu 5 - 50 Gew.-%, besonders bevorzugt zu 5 bis 30 Gew.-% in der Mischung enthalten.

Der Einsatz von hochbrechenden Dithiolen nach Formel (I) mit einem Brechungsindex $\geq$ 1,58 ermöglicht es im erfindungsgemäßen Verfahren unerwarteter weise sehr weitgehend, andere verwendete höher funktionale Polythiole zu ersetzen, ohne den Brechungsindex des resultierenden Gießharzes zu erniedrigen. Damit lässt sich die Bruchfestigkeit sehr gut einstellen und es wird gleichzeitig ein Polymer (Gießharz) mit einem niedrigen spezifischen Gewicht von $\leq$ 1,23 g/cm$^3$ erhalten.

Neben einem oder mehreren Dithiolen gemäß Formel (I) enthält die Mischung ein oder mehrere Thiole der Gruppe (I) bestehend aus Pentaerythrithol-tetrakis-3-mercaptopropionat, Pentaerythrithol-tetrakis-thioglycolat, Trimethylolpropan-tris-3-mercaptopropionat, Trimethylolpropan-tris-thioglycolat, Pentaerythrithol-tetrakis-2-mercaptopropionat, Trimethylolpropan-tris-2-mercaptopropionat, Ditrimethylolpropan-tetrakis-3-mercaptopropionat, Ditrimethylolpropan-tetrakis-thioglycolat, Ditrimethylolpropan-tetrakis-2-mercaptopropionat, Dipentaerythrithol-hexakis-3-mercaptopropionat, Dipentaerythrithol-hexakis-thioglycolat, Dipentaerythrithol-hexakis-2-mercaptopropionat, Tris[3-mercaptopropionyloxy)-ethyl]-isocyanurat, Tris[mercaptoethyloxy)-ethyl]-isocyanurat, Tris[2-mercaptopropionyloxy)-ethyl]-isocyanurat, Pentaerythrithol-tetrakis-4-mercaptobutyrat, Trimethylolpropan-tris-4-mercaptobutyrat, Trimethylolpropan-tris-4-mercaptobutyrat, Pentaerythrithol-tetrakis-3-mercaptobutyrat, Trimethylolpropan-tris-3-mercaptobutyrat, Trimethylolpropan-tris-3-mercaptobutyrat, Tris[3-mercaptobutyloxy)-ethyl]-isocyanurat, Tris[4-mercaptobutyloxy)-ethyl]-isocyanurat und Essigsäure, 2,2',2'',2''''-[1,2-ethanediylidenetetrakis(thio)]tetrakis-,tetrakis(2-mercaptoethyl) ester (CAS-Nummer 144429-23-2) auch bekannt als 1,1,2,2-Tertrakis(2-mercaptoethoxy-carbonylmethylthio)ethan, bevorzugt Pentaerythrithol-tetrakis-3-mercaptopropionat, Pentaerythrithol-tetrakis-thioglycolat, Trimethylolpropan-tris-3-mercaptopropionat, Trimethylolpropan-tris-thioglycolat, Ditrimethylolpropan-tetrakis-3-mercaptopropionat, Dipentaerythrithol-hexakis-3-mercaptopropionat und Essigsäure, 2,2',2'',2''''-[1,2-ethanediylidenetetrakis(thio)]tetrakis-,tetrakis(2-mercaptoethyl) ester, besonders bevorzugt Pentaerythrithol-tetrakis-3-mercaptopropionat, Trimethylolpropan-tris-3-mercaptopropionat und Essigsäure, 2,2',2'',2''''-[1,2-ethanediylidenetetrakis(thio)]tetrakis-,tetrakis(2-mercaptoethyl) ester.

Als Dithiole der Formel (I) werden in dieser Kombination bevorzugt Ethan-1,2-dithiol, 2,2'-Dimercaptodiethylsulfid, 1,11-Dimercapto-3,6,9-trithiaundecan oder eine Mischung hiervon eingesetzt.

In einer weiteren Ausführungsform werden in Schritt (a) des erfindungsgemäßen Verfahrens als Thiolkomponente (A) ein oder mehrere Dithiole gemäß Formel (I) in Kombination mit einem oder mehreren Thiolen der Gruppe (II) bestehend aus 4-Mercaptomethyl-1,8-dimercapto-3,6-dithiaoctane, 4,8-Dimercaptomethyl-1,11-dimercapto-3,6,9-trithiaundecan, Tetrakis(mercaptomethyl)methan, 1,1,3,3,-Tetrakis(mercaptomethylthio)propan, 1,1,5,5-Tetrakis(mercaptomethylthio)-3-thiapentan, 1,1,6,6-Tetrakis(mercaptomethylthio)-3,4-dithiahexan, 2,2-Bis(mercaptomethyl)-1,3-propandithiol, Bis(mercaptomethyl)sulfid, Bis(mercaptopropyl)sulfid, Bis(mercaptomethylthio)methan, Tris(mercaptomethylthio)methan, 1,2,3-Tris(mercaptomethylthio)propan, 1,2,3-Tris(mercaptoethylthio)propan, Tetrakis(mercaptomethylthio)methan, Tetrakis(mercaptoethylthiomethyl)methan, Tetrakis(mercaptopropylthiomethyl)methan, 2,5-Dimercapto-1,4-dithian, 2,5-Bismercaptomethyl-1,4-dithian eingesetzt.

In dieser Ausführungsform werden als Bestandteil der Thiolkomponente A zusätzlich zum Dithiol der Formel I als ein oder mehrere Thiole der Gruppe (II) bevorzugt 4-Mercaptomethyl-3,6-dithia-1,8-octandithiol, 5,7-Dimercaptomethyl-1,11-dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-trithiaundecan und Mischungen hiervon eingesetzt, besonders bevorzugt ist 4-Mercaptomethyl-3,6-dithia-1,8-octandithiol. Als Dithiole der Formel I werden in dieser Kombination bevorzugt Ethan-1,2-dithiol, 2,2'-Dimercaptodiethylsulfid, 1,11-Dimercapto-3,6,9-trithiaundecan oder eine Mischung hiervon eingesetzt.

In einer weiteren Ausführungsform werden in Schritt (a) des erfindungsgemäßen Verfahrens als Thiolkomponente (A) ein oder mehrere Dithiole gemäß Formel (I) in Kombination mit einem oder mehreren Thiolen der Gruppe (I) und einem oder mehreren Thiolen der Gruppe (II) eingesetzt.

Besonders bevorzugt werden in Schritt (a) des erfindungsgemäßen Verfahrens als Thiolkomponente (A) ein oder mehrere Dithiole gemäß Formel (I) in Kombination mit einem oder mehreren Thiolen der Gruppen (I) und/oder (II) eingesetzt. Als besonders geeignete Mischungen werden solche eingesetzt die die Thiole 4-Mercaptomethyl-3,6-dithia-1,8-octandithiol, 5,7-Dimercaptomethyl-1,11-dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-trithiaundecan, Pentaerythrithol-tetrakis-3-mercaptopropionat, Trimethylolpropan-tris-3-mercaptopropionat, Ditrimethylolpropan-tetrakis-2-mercaptopropionat, Dipentaerythrithol-hexakis-3-mercaptopropionat, 1,1,2,2-Tertrakis(2-mercaptoethoxycarbonylmethylthio)ethan, Ethan-1,2-diol, 2,2'-Dimercaptodiethylsulfid 1,11-Dimercapto-3,6,9-trithiaundecan oder Mischungen hiervon enthalten.

In Schritt a) wird eine Mischung mit folgender Zusammensetzung eingesetzt:

- 5 - 50 Gew.-%, bevorzugt 5 - 30 Gew.-%, einer Thiolkomponente (A) gemäß Formel (I)
- 0 - 50 Gew.-% , bevorzugt 15 - 45 Gew.-% ein oder mehrere Thiolen der Gruppen (I) und/oder (II) und
- 30 - 70 Gew.-% einer Isocyanatkomponente (B).

Besonders bevorzugt wird in Schritt a) eine Mischung mit folgender Zusammensetzung eingesetzt:

- 5 - 30 Gew.-% einer oder mehrerer Thiolkomponeten (A) gemäß Formel (I) ausgewählt aus der Gruppe bestehend aus Ethan-1,2-dithiol, 2,2'-Dimercaptodiethylsulfid, 1,11-Dimercapto-3,6,9-trithiaundecan

- 15 - 45 Gew.-% ein oder mehrerer Thiole der Gruppe (I) und/oder (II) ausgewählt aus der Gruppe bestehend aus 4-Mercaptomethyl-3,6-dithia-1,8-octandithiol, 5,7-Dimercaptomethyl-1,11-dimercapto-3,6,9- trithiaundecan, 4,7-Dimercaptomethyl-1,11-dimercapto-3,6,9-trithiaundecan, 4,8-Dimercapto-methyl-1,11-dimercapto-3,6,9-trithiaundecan, Pentaerythrithol-tetrakis-3-mercaptopropionat, Trimethylolpropan-tris-3-mercaptopropionat, Ditrimethylolpropantetrakis-2-mercaptopropionat, Dipentaerythrithol-hexakis-3-mercaptopropionat, Essigsäure, 2,2',2'',2''''-[1,2-ethanediylidenetetrakis(thio)]tetrakis-,tetrakis(2-mercaptoethyl) ester (CAS-Nummer 144429-23-2)
- 30 - 70 Gew.-% der Isocyanatkomponente (B) bestehend aus einem oder einer Mischung von mehreren Isocyanaten aus der Gruppe Isophorondiisocyanat, Dicyclohexylmethandiisocyanat, Hexamethylendiisocyanat, Trimethylhexamethylendiisocyanat, Toluendiisocyanat, α.α,α',α'-Tetramethyl-xylylendiisocyanat, Xylylendiisocyanat.

Zur Erhöhung der Bruchfestigkeit können auch niedrigbrechende Dithiole nach Gruppe (III) bestehend aus Glykoldimercaptoacetat, Glykol-di-3-mercaptopropionat, Diethylenglykoldimercaptoacetat, Diethylenglykol-di-3-mercaptopropionat, Triethylenglykoldimercaptopropionat, Triethylenglykol-di-3-mercaptopropionat, Propylenglykoldimercaptoacetat, Propylenglykol-di-3-mercaptopropionat, Dipropylenglykoldimercaptoacetat, Dipropylenglykol-di-3-mercaptopropionat, Tripropylenglykoldimercaptopropionat, Tripropylenglykol-di-3-mercaptopropionat verwendet werden.

Da diese Verbindungen aber sämtlich einen Brechungsindex $n_D < 1{,}54$ aufweisen und die Bruchfestigkeit des Polymerformkörpers nur mäßig erhöhen, ist ihr Einsatz für Formmassen mit einem Brechungsindex von $n_D \geq 1{,}60$ nur sehr begrenzt möglich. Vergleichsbeispiel 4 verdeutlicht dies.

Die geeignete Kombination von Thiolen enthält vorzugsweise spezielle aliphatische Dithiolkomponenten mit hohem Brechungsindex. Hierdurch wird die Bruchfestigkeit wesentlich verbessert und der Brechungsindex des Gießharzes bleibt hoch.

Die mit dem erfindungsgemäßen Verfahren hergestellten Gießharze auf Polyurethanbasis weisen einen Bre-chungsindex $n_D \geq 1{,}60$, bestimmt mit einem Abbé-Refraktometer, eine Abbé-Zahl d $\geq 38$, bestimmt mit einem Abbé-Refraktometer, und eine Wärmeformbeständigkeit Tg $\geq 100$ °C, bestimmt mittels dynamischer Differenzkalorimetrie (DSC), auf. Überraschenderweise weist das mit dem erfindungsgemäßen Verfahren hergestellte Gießharz gleichzeitig eine hohe Bruchfestigkeit im Drop Ball Test (FDA Drop Ball Test mit einer 16 g Kugel und einer Fallhöhe von 127 cm sowie ein erweiterter Test mit einer 67 g Kugel und einer Fallhöhe von 127 cm) und eine geringe Dichte $\leq 1{,}23$ g/cm$^3$ auf.

Beschreibung der Methoden:

Bestimmung der Glasübergangstemperatur (Tg) der Polymere als Maß für die Wärmeformbeständigkeit:

Die Bestimmung der Glasübergangstemperatur erfolgt mit Hilfe der dynamischen Differenzkalorimetrie (Differential Scanning Calorimetry, DSC). Die Bestimmung der Tg-Werte erfolgt im speziellen mit dem Gerät DSC 1 von Mettler-Toledo. Verwendet wird die STARe-Software in der Version 10.00c. Die Polymerprobe wird zunächst von 40 °C auf 145 °C mit einer Heizrate von 10 K/min erwärmt und für 8 min auf dieser Temperatur gehalten. Die Probe wird mit -30K/min auf 45 °C abgekühlt und dann mit einer Heizrate von 10 K/min auf 155 °C erwärmt. Die Bestimmung der Glasübergangstemperatur erfolgt auf Basis der 2. Aufheizkurve.

Bestimmung der Abbé-Zahl

Abbé-Zahlen werden mit einem digitalen Mehrwellen Refraktometer der Firma SCHMIDT + HAENSCH vom Typ DSR-λ bei 20 °C bestimmt. Die Proben werden zuvor geschliffen und poliert. Der Abbewert errechnet sich dann gemäß der Formel

$$\text{Abbé-Zahl} = (n_D - 1) / (n_F - n_C)$$

mit

$n_D$ - Brechwert bei 589,3 nm
$n_F$ - Brechwert bei 486,1 nm
$n_C$ - Brechwert bei 656,3 nm

Bestimmung des Brechungsindex

Brechungsindices (n) werden mit einem digitalen Refraktometer der Firma Dr. Kernchen vom Typ Abbemat bei einer Wellenlänge von 589,3 nm (Natrium D-Linie) und bei einer Temperatur von 20 °C bestimmt.

Die Bestimmung der Dichte der festen Polymere erfolgt auf Basis des archimedischen Prinzips mit Hilfe einer Analysenwaage. Im speziellen verwendet wird eine Mettler-Toledo Excellence Analysenwaage vom Typ XS205 Dual Range ausgerüstet mit dem Dichtebestimmungskit für diese Waage. Die Messung erfolgt bei 21 °C.

Die Beurteilung der Farbe der Formkörper erfolgt visuell vor einem weißen Blatt Papier, dass als Hintergrund verwendet wird.

Die Beurteilung der Transparenz der Formkörper erfolgt visuell durch Betrachtung eines Formkörpers im Durchlicht.

Für die Tests zur Bruchfestigkeit wird ein BPI Drop Ball Tester verwendet. Mit diesem Gerät wird an jeweils 20 Prüfkörpern (Gießlinge) der FDA Drop Ball Test (Gewicht der Stahlkugel: 16 g / Fallhöhe: 127 cm) sowie ein erweiterter Test (Gewicht der Stahlkugel: 67 g / Fallhöhe: 127 cm) durchgeführt. Der erweiterte Test gilt dann als bestanden wenn >70 % der Prüfkörper diesen unzerstört überstehen.

Überraschenderweise konnten die sehr guten mechanischen Eigenschaften bei gleichzeitig sehr guten optischen Eigenschaften durch eine geeignete Kombination von Polythiolen als Härterkomponente, sowie von im Markt kommerziell verfügbaren Isocyanaten erreicht werden. Die Zugabe von speziellen Isocyanaten ist ebenso wenig notwendig, wie das Verfahren in mehreren Stufen zu führen. Das erfindungsgemäße Verfahren führt in einem kostengünstigen, einstufigen Prozess zu den gewünschten Eigenschaften des Gießharzes.

Die mit dem erfindungsgemäßen Verfahren hergestellten Gießharze (Vergussmassen) auf Polythiourethanbasis sind für elektronische oder optoelektronische Bauteile und die Herstellung optischer Linsen geeignet. Sie zeichnen sich durch eine hohe Bruchfestigkeit, eine niedrige Dichte, sowie sehr gute optische und mechanische Eigenschaften aus, wie sie für Gießlinge verschiedener Formgebungen und Anwendungen benötigt werden. Damit ein Gießharz zur Herstellung von optischen Linsen verwendet werden kann, ist es immer notwendig, dass der Brechungsindex und die Abbe-Zahl sowie die Transmission bestimmte Werte erreichen. Wenn diese Werte nicht erreicht werden, ist das Gießharz für den Einsatzbereich nicht geeignet.

Die geringe Dichte des erfindungsgemäß hergestellten Materials hat den Vorteil, dass die fertigen optischen Linsen ein geringeres Gewicht als Linsen aus Material höherer Dichte haben. Die Linsen sind hierdurch preiswerter, weil weniger Material für die gleiche Linsengröße verwendet werden muss und leichter, was bei Brillengläsern den Tragekomfort erhöht. Gleichzeitig muss ein Gießharz für optische Linsen eine bestimmte Bruchfestigkeit aufweisen. Ohne den Nachweis einer bestimmten Bruchfestigkeit darf ein entsprechendes Material, insbesondere in den USA, überhaupt nicht für optische Linsen verwendet werden.

Das erfindungsgemäße Verfahren ist einstufig und erfolgt einfach durch Mischen der Komponenten, Entgasung der Mischung und Aushärten des Polymers. Ein mehrstufiger Prozess, der die Synthese einer Zwischenstufe z.B. in Form eines Prepolymeren verlangt, ist nicht erforderlich. Die Aushärtung der Formulierung erfolgt mit den üblichen Katalysatoren wie sie für die Aushärtung von Polythiourethanpolymeren verwendet werden. Im erfindungsgemäßen Verfahren sind z.B. Dibutylzinndichlorid, Dibutylzinndilaurat, sowie Amine wie DABCO, Trialkylamine und Stickstoffheterocyclen wie Pyridin- und Imidazolderivate als Katalysatoren einsetzbar.

Die Erfindung wird anhand der nachfolgenden Beispiele näher erläutert.

Beispiel 1:

44,4 g Isophorondiisocyanat, 11,1 g Hexamethylendiisocyanat, 28,3 g 4-Mercaptomethyl-3,6-dithia-1,8-octandithiol, 16,2 g Dimercaptodiethylsulfid und 0,5 g Dibutylzinndilaurat wurden vermischt, homogenisiert und im Vakuum entgast. Die Mischung wurde dann in Aluminiumformen gegeben und 20 h bei 120 °C ausgehärtet.

Man erhielt einen transparenten, farblosen Formkörper mit den in Tabelle 1 genannten Eigenschaften. Der Formkörper bestand den Drop ball Test nach FDA sowie den erweiterten Test mit einer 67 g Kugel.

Beispiel 2:

57,3 g Dicyclohexylmethandiisocyanat, 35,0 g 4-Mercaptomethyl-3,6-dithia-1,8-octandithiol, 7,7 g Dimercaptodiethylsulfid und 0,05 g Dimorpholinyldiethylether wurden vermischt, homogenisiert und im Vakuum entgast. Die Mischung wurde dann in Aluminiumformen gegeben und 20 h bei 120 °C ausgehärtet.

Man erhielt einen transparenten, farblosen Formkörper mit den in Tabelle 1 genannten Eigenschaften. Der Formkörper bestand den Drop ball Test nach FDA sowie den erweiterten Test mit einer 67 g Kugel.

Beispiel 3:

54,1 g Isophorondiisocyanat, 28,7 g 4-Mercaptomethyl-3,6-dithia-1,8-octandithiol, 17,1 g Dimercaptodiethylsulfid und 0,05 g Dimorpholinyldiethylether wurden vermischt, homogenisiert und im Vakuum entgast. Die Mischung wurde dann in Aluminiumformen gegeben und 20 h bei 120 °C ausgehärtet.

Man erhielt einen transparenten, farblosen Formkörper mit den in Tabelle 1 genannten Eigenschaften. Der Formkörper bestand den Drop ball Test nach FDA sowie den erweiterten Test mit einer 67 g Kugel.

Beispiel 4:

44,4 g Isophorondiisocyanat, 11,1 g Hexamethylendiisocyanat, 28,3 g 4-Mercaptomethyl-3,6-dithia-1,8-octandithiol, 16,2 g Dimercaptodiethylsulfid und 0,05 g Dimorpholinyldiethylether wurden vermischt, homogenisiert und im Vakuum entgast. Die Mischung wurde dann in Aluminiumformen gegeben und 20 h bei 120 °C ausgehärtet.
Man erhielt einen transparenten, farblosen Formkörper mit den in Tabelle 1 genannten Eigenschaften. Der Formkörper bestand den Drop ball Test nach FDA sowie den erweiterten Test mit einer 67 g Kugel.

Beispiel 5:

35,9 g Isophorondiisocyanat, 11,1 g Hexamethylendiisocyanat, 10,0g Dicyclohexylmethandiisocyanat, 27,6 g 4-Mercaptomethyl-3,6-dithia-1,8-octandithiol, 15,8 g Dimercaptodiethylsulfid, 4,2 g Essigsäure,2,2',2'',2''''-[1,2-ethandiylidentetrakis-(thio)]tetrakis-,tetrakis(2-mercaptoethyl)ester und 0,1 g Dibutylzinndichlorid wurden vermischt, homogenisiert und im Vakuum entgast. Die Mischung wurde dann in Aluminiumformen gegeben und 20 h bei 120 °C ausgehärtet.
Man erhielt einen transparenten, farblosen Formkörper mit den in Tabelle 1 genannten Eigenschaften. Der Formkörper bestand den Drop ball Test nach FDA sowie den erweiterten Test mit einer 67 g Kugel.

Tabelle 1: Rezepturen und Eigenschaften der gemäß Beispiel 1 - 5 hergestellten Gießharze (erfindungsgemäß)

|  | 1 | 2 | 3 | 4 | 5 |
|---|---|---|---|---|---|
| Isophorondiisocyanat | 44,4 g |  | 54,1 g | 44,4 g | 35,9 g |
| Hexamethylendiisocyanat | 11,1 g |  |  | 11,1 g | 11,1 g |
| Dicyclohexylmethandiisocyanat |  | 57,3 g |  |  | 10,0 g |
| 4-Mercaptomethyl-3,6-dithia-1,8-octandithiol | 28,3 g | 35,0 g | 28,7 g | 28,3 g | 27,6 g |
| Dimercaptodiethylsulfid | 16,2 g | 7,7 g | 17,1 g | 16,2 g | 15,8 g |
| Essigsäure,2,2',2'',2''''-[1,2-ethandyliden-tetrakis-(thio)]tetrakis-,tetrakis(2-mercaptoethyl)ester |  |  |  |  | 4,2 g |
| Dimorpholinyldiethylether |  | 0,05 g | 0,05 g | 0,05 g |  |
| Dibutylzinndilaureat | 0,5 g |  |  |  | 0,5 |
|  |  |  |  |  |  |
| $n_D$ | 1,60 | 1,60 | 1,60 | 1,60 | 1,60 |
| Abbé-Zahl | 39 | 40 | 38 | 39 | 39 |
| Tg [°C] | 110 | 113 | 114 | 115 | 105 |
| Dichte [g/cm$^3$] | 1,23 | 1,23 | 1,23 | 1,23 | 1,23 |

Vergleichsbeispiel 1:

43,0 g Isophorondiisocyanat, 10,8 g Hexamethylendiisocyanat, 45,8 g 4-Mercaptomethyl-3,6-dithia-1,8-octandithiol und 0,5 g Dibutylzinndilaureat wurden vermischt, homogenisiert und im Vakuum entgast. Die Mischung wurde dann in Aluminiumformen gegeben und 20 h bei 120 °C ausgehärtet.
Man erhielt einen transparenten, farblosen Formkörper. Der Formkörper bestand den Drop ball Test nach FDA, den erweiterten Test mit einer 67 g Kugel jedoch nicht.

Vergleichsbeispiel 2:

55,6 g Isophorondiisocyanat, 44,4 g 4-Mercaptomethyl-3,6-dithia-1,8-octandithiol und 0,5 g Dibutylzinndilaureat wurden vermischt, homogenisiert und im Vakuum entgast. Die Mischung wurde dann in Aluminiumformen gegeben und 20 h bei 120 °C ausgehärtet.
Man erhielt einen transparenten, farblosen Formkörper. Der Formkörper bestand sowohl den Drop ball Test nach FDA und den erweiterten Test mit einer 67 g Kugel nicht.

Vergleichsbeispiel 3:

50,0 g Norbornandiisocyanat, 25,0 g 4-Mercaptomethyl-3,6-dithia-1,8-octandithiol, 25,0 g Pentaerythrithol-tetrakis-3-mercaptopropionat und 0,5 g Dibutylzinndilaureat wurden vermischt, homogenisiert und im Vakuum entgast. Die Mischung wurde dann in Aluminiumformen gegeben und 20 h bei 120 °C ausgehärtet.
Man erhielt einen transparenten, farblosen Formkörper. Der Formkörper bestand den Drop ball Test nach FDA, den erweiterten Test mit einer 67 g Kugel jedoch nicht.

Vergleichsbeispiel 4:

56,0 g Dicyclohexylmethandiisocyanat, 40,0 g 4-Mercaptomethyl-3,6-dithia-1,8-octandithiol, 4,0 g Glykol-bis-2-mercaptopropionat und 0,5 g Dibutylzinndilaureat wurden vermischt, homogenisiert und im Vakuum entgast. Die Mischung wurde dann in Aluminiumformen gegeben und 20 h bei 120 °C ausgehärtet.
Man erhielt einen transparenten, farblosen Formkörper. Der Formkörper bestand den Drop ball Test nach FDA, den erweiterten Test mit einer 67 g Kugel jedoch nicht.

Tabelle 2: Rezepturen und Eigenschaften der gemäß Vergleichsbeispiel 1 - 4 hergestellten Gießharze (nicht erfindungsgemäß)

|  | V1 | V2 | V3 | V4 |
|---|---|---|---|---|
| Norbornandiisocyanat |  |  | 50,0 g |  |
| Isophorondiisocyanat | 43,0 g | 55,6 g |  |  |
| Hexamethylendiisocyanat | 10,8 g |  |  |  |
| Dicyclohexylmethandiisocyanat |  |  |  | 56,0 g |
| 4-Mercaptomethyl-3,6-dithia-1,8-octandithiol | 45,8 g | 44,4 g | 25,0 g | 40,0 g |
| Pentaerythrithol-tetrakis-3-mercaptopropionat |  |  | 25,0 g |  |
| Glykol-bis-2-mercaptopropionat |  |  |  | 4,0 g |
| Dimercaptod iethylsulfid |  |  |  |  |
| Essigsäure,2,2',2",2""-[1,2-ethandiyliden-tetrakis-(thio)]tetrakis-,tetrakis(2-mercaptoethyl)ester |  |  |  |  |
| Dibutylzinndilaureat | 0,5 g | 0,5 g | 0,5 g | 0,5 g |
|  |  |  |  |  |
| $n_d$ | 1,61 | 1,60 | 1,60 | 1,59 |
| Abbé-Zahl | 39 | 42 | 41 | 41 |
| Tg [°C] | 109 | 105 | 116 | 107 |
| Dichte [g/cm$^3$] | 1,25 | 1,23 | 1,30 | 1,23 |

Die Messung des Brechungsindexes, der Abbé-Zahl, Wärmeformbeständigkeit Tg und der Dichte erfolgte mit den in der Beschreibung genannten Methoden.

**Patentansprüche**

1. Verfahren zur Herstellung eines Polyurethangießharzes, wobei die Herstellung in einem einstufigen Prozess die Schritte umfasst:

    a) Mischen mindestens einer Thiolkomponente (A) mit mindestens einer Isocyanatkomponente (B),
    b) Entgasung der Mischung und
    c) Aushärten des Polyurethanpolymers,

**dadurch gekennzeichnet, dass**
die Thiolkomponente (A) mindestens ein Dithiol nach Formel (I)

$$HS\text{-}[CH_2CH_2\text{-}S]_x\text{-}CH_2CH_2\text{-}SH \qquad (I)$$

mit x = 0 - 5 enthält und
die Isocyanatkomponente (B) ein oder mehrere Diisocyanat(e) ausgewählt aus der Gruppe bestehend aus Isophorondiisocyanat, Dicyclohexylmethandiisocyanat, Hexamethylendiisocyanat, Trimethylhexamethylendiisocyanat, , $\alpha,\alpha,\alpha',\alpha'$-Tetramethyl-xylylendiisocyanat, Xylylendiisocyanat oder eine Mischung hier-von ist und als Thiolkomponente (A) 5 - 50 Gew.-% bezogen auf die Mischung eines oder mehrerer Dithiole nach Formel (I) verwendet werden.

2. Verfahren gemäß Anspruch 1, **dadurch gekennzeichnet, dass** als Thiolkomponente (A) ein oder mehrere Dithiole gemäß Formel (I) in Kombination mit einem oder mehreren Thiolen der Gruppe (I) bestehend aus Pentaerythrithol-tetrakis-3-mercaptopropionat, Pentaerythrithol-tetrakis-thioglycolat, Trimethylolpropan-tris-3-mercaptopropionat, Trimethylolpropan-tris-thioglycolat, Pentaerythrithol-tetrakis-2-mercaptopropionat, Trimethylolpropan-tris-2-mercaptopropionat, Ditrimethylolpropan-tetrakis-3-mercaptopropionat, Ditrimethylolpropan-tetrakis-thioglycolat, Ditrimethylolpropan-tetrakis-2-mercaptopropionat, Dipentaerythrithol-hexakis-3-mercaptopropionat, Dipentaerythrithol-hexakis-thioglycolat, Dipentaerythrithol-hexakis-2-mercaptopropionat, Tris[3-mercaptopropionyloxy)-ethyl]-isocyanurat, Tris[mercaptoethyloxy)-ethyl]-isocyanurat, Tris(2-mercaptopropionyloxy)-ethyl]-isocyanurat, Pentaerythrithol-tetrakis-4-mercaptobutyrat, Trimethylolpropan-tris-4-mercaptobutyrat, Pentaerythrithol-tetrakis-3-mercaptobutyrat, Trimethylolpropan-tris-3-mercaptobutyrat, Tris[3-mercaptobutyloxy)-ethyl]-isocyanurat, Tris[4-mercaptobutyloxy)-ethyl]-isocyanurat und Essigsäure, 2,2',2'',2''''-[1,2-ethanediylidenetetrakis(thio)]tetrakis-,tetrakis(2-mercaptoethyl) ester (CAS-Nummer 144429-23-2) eingesetzt werden.

3. Verfahren gemäß einem der vorhergehenden Ansprüche, **dadurch gekennzeichnet, dass** als Thiolkomponente (A) ein oder mehrere Dithiole gemäß Formel (I) in Kombination mit einem oder mehreren Thiolen der Gruppe (I) eingesetzt werden.

4. Verfahren gemäß einem der vorhergehenden Ansprüche, **dadurch gekennzeichnet, dass** als Thiolkomponente (A) ein oder mehrere Dithiole gemäß Formel (I) in Kombination mit einem oder mehreren Thiolen der Gruppe (I) eingesetzt werden, wobei das Thiol ausgewählt ist aus Pentaerythrithol-tetrakis-3-mercaptopropionat, Trimethylolpropan-tris-3-mercaptopropionat und 1,1,2,2-Tertrakis(2-mercaptoethoxycarbonyl-methylthio)ethan.

5. Verfahren gemäß Anspruch 1, **dadurch gekennzeichnet, dass** als Thiolkomponente (A) ein oder mehrere Dithiole gemäß Formel (I) in Kombination mit einem oder mehreren Thiolen der Gruppe (II) bestehend aus 4-Mercaptomethyl-1,8-dimercapto-3,6-dithiaoctan, 4,8-Dimercaptomethyl-1,11-dimercapto-3,6,9-trithiaundecan, Tetrakis(mercaptoethyl)methan, 1,1,3,3,-Tetrakis(mercaptomethylthio)propan, 1,1,5,5-Tetrakis(mercaptomethylthio)-3-thiapentan, 1,1,6,6-Tetrakis(mercaptomethylthio)-3,4-dithiahexan, 2,2-Bis(mercaptomethyl)-1,3-propandithiol, Bis(mercaptomethyl)sulfid, Bis(mercaptopropyl)sulfid, Bis(mercaptomethylthio)methan, Tris(mercaptomethylthio)methan, 1,2,3-Tris(mercaptomethylthio)propan, 1,2,3-Tris(mercaptoethylthio)propan, Tetrakis(mercaptomethylthio)methan, Tetrakis(mercaptoethylthiomethyl)methan, Tetrakis(mercaptopropylthiomethyl)methan, 2,5-Dimercapto-1,4-dithian, 2,5-Bismercaptomethyl-1,4-dithian ausgewählt werden.

6. Verfahren gemäß einem der Ansprüche 1 oder 5 **dadurch gekennzeichnet, dass** als Thiolkomponente (A) ein oder mehrere Dithiole gemäß Formel (I) in Kombination mit einem oder mehreren Thiolen der Gruppe (II) eingesetzt werden, wobei das ein oder mehrere Thiole 4-Mercaptomethyl-3,6-dithia-1,8-octandithiol, 5,7-Dimercaptomethyl-1,11-dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-trithiaundecan und Mischungen hiervon ist.

7. Verfahren gemäß einem der Ansprüche 1, 5 oder 6, **dadurch gekennzeichnet, dass** als Thiolkomponente (A) ein oder mehrere Dithiole gemäß Formel (I) in Kombination mit einem oder mehreren Thiolen der Gruppe (II) eingesetzt werden.

8. Verfahren gemäß einem der vorhergehenden Ansprüche, **dadurch gekennzeichnet, dass** als Thiolkomponente (A) ein oder mehrere Dithiole gemäß Formel (I) in Kombination mit einem oder mehreren Thiolen der Gruppe (I) und/oder Gruppe (II) eingesetzt werden.

9. Verfahren gemäß einem der vorhergehenden Ansprüche, **dadurch gekennzeichnet, dass** in Schritt a) eine Mischung mit folgender Zusammensetzung eingesetzt wird:

- • 5 - 50 Gew.-%, bezogen auf die Mischung einer Thiolkomponente (A) gemäß Formel (I)
- • 15 - 45 Gew.-% bezogen auf die Mischung ein oder mehrerer Thiole der Gruppe (I) und/oder (II) und
- • 30-70 Gew.-% bezogen auf die Mischung einer Isocyanatkomponente (B).

10. Verfahren gemäß einem der vorhergehenden Ansprüche, **dadurch gekennzeichnet, dass** in Schritt a) eine Mischung mit folgender Zusammensetzung eingesetzt wird:

- • 5 - 50 Gew.-% bezogen auf die Mischung einer oder mehrerer Thiolkomponeten (A) gemäß Formel (I) ausgewählt aus der Gruppe bestehend aus Ethan-1,2-dithiol, 2,2'-Dimercaptodiethylsulfid, 1,11-Dimercapto-3,6,9-trithiaundecan
- • 15-45 Gew-% bezogen auf die Mischung ein oder mehrerer Thiole der Gruppen (I) und/oder (II), und
- • 30-70 Gew.-% bezogen auf die Mischung einer Isocyanatkomponente (B).

## Claims

1. A method for producing a polyurethane casting resin, wherein the production comprises, in a single step process, the steps:

    a) Mixing at least one thiol component (A) with at least one isocyanate component (B),
    b) Degassing the mixture, and
    c) Curing the polyurethane polymer

    **characterized in that**
    the thiol component (A) contains at least one dithiol according to Formula (I)

    $$HS\text{-}[CH_2CH_2\text{-}S]_x\text{-}CH_2CH_2\text{-}SH \qquad (I)$$

    where x = 0-5, and
    the isocyanate component (B) is one or more diisocyanate(s) selected from the group composed of isophorone diisocyanate, dicyclohexylmethane diisocyanate, hexamethylene diisocyanate, trimethyl hexamethylene diisocyanate, $\alpha,\alpha,\alpha',\alpha'$-tetramethyl xylylene diisocyanate, xylylene diisocyanate, or a mixture of these, and 5-50 wt.%, relative to the mixture, of one or more dithiols according to Formula (I) is used as thiol component (A).

2. The method according to Claim 1, **characterized in that** one or more dithiols according to Formula (I) are used in combination with one or more thiols from the group (I), composed of pentaerythritol tetrakis(3-mercaptopropionate), pentaerythritol tetrakis thioglycolate, trimethylolpropane tris(3-mercaptopropionate), trimethylolpropane tris thioglycolate, pentaerythritol tetrakis(2- mercaptopropionate), trimethylolpropane tris(2-mercaptopropionate), ditrimethylolpropane tetrakis(3-mercaptopropionate), ditrimethylolpropane tetrakis thioglycolate, ditrimethylolpropane tetrakis(2-mercaptopropionate), dipentaerythritol hexakis(3-mercaptopropionate), dipentaerythritol hexakis thioglycolate, dipentaerythritol hexakis(2-mercaptopropionate), tris(3-mercaptopropionyloxy)ethyl isocyanurate, tris(mercaptoethyl oxy)ethyl isocyanurate, tris(2-mercaptopropionyloxy)ethyl isocyanurate, pentaerythritol tetrakis(4-mercapto butyrate), trimethylolpropane tris(4-mercapto butyrate), pentaerythritol tetrakis(3-mercapto butyrate), trimethylolpropane tris(3-mercapto butyrate), tris(3-mercaptobutyloxy)ethyl isocyanurate, tris(4-mercaptobutyloxy)ethyl isocyanurate, and acetic acid, 2,2',2'',2'''-[1,2-ethanediylidenetetrakis(thio)]tetrakis-,tetrakis(2-mercaptoethyl) ester (CAS number 144429-23-2), as the thiol component (A).

3. The method according to one of the preceding claims, **characterized in that** one or more dithiols according to Formula (I) are used in combination with one or more thiols from group (I) as thiol component (A).

4. The method according to one of the preceding claims, **characterized in that** one or more dithiols according to Formula (I) are selected in combination with one of more thiols from group (I), wherein the thiol is selected from pentaerythritol tetrakis(3-mercaptopropionate), trimethylolpropane tris(3-mercaptopropionate), and 1,1,2,2-tetrakis(2-mercapto ethoxycarbonyl methylthio)ethane, as thiol component (A).

5. The method according to Claim 1, **characterized in that** one or more dithiols according to Formula (I) are selected in combination with one of more thiols from group (II), composed of 4-mercapto methyl-1,8-dimercapto-3,6-dithia octane, 4,8-dimercaptomethyl-1,11-dimercapto-3,6,9-trithiaundecane, tetrakis(mercaptomethyl)methane, 1,1,3,3-tetrakis(mercaptomethylthio)propane, 1,1,5,5-tetrakis(mercaptomethylthio)-3-thiapentane, 1,1,6,6-tetrakis(mercaptomethylthio)-3,4-dithiahexane, 2,2-bis(mercaptomethyl)-1,3-propanedithiol, bis(mercaptomethyl)sulfide, bis(mercaptopropyl)sulfide, bis(mercaptomethylthio)methane, tris(mercaptomethylthio)methane, 1,2,3-tris(mercaptomethylthio)propane, 1,2,3-tris(mercaptoethylthio)propane, tetrakis(mercaptomethylthio)methane, tetrakis(mercaptoethylthiomethyl)methane, tetrakis(mercaptopropylthiomethyl)methane, 2,5-dimercapto-1,4-dithiane, 2,5-bis(mercaptomethyl)-1,4-dithiane, as thiol component (A).

6. The method according to one of Claims 1 or 5, **characterized in that** one of more dithiols according to Formula (I) are used in combination with one or more thiols from group (II), wherein the one or more thiols are 4-(mercapto methyl)-3,6-dithia-1,8-octanedithiol, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, and mixtures of the same, as thiol component (A).

7. The method according to one of Claims 1, 5, or 6, **characterized in that** one or more dithiols according to Formula (I) are used in combination with one or more thiols from group (II) as thiol component (A).

8. The method according to one of the preceding claims, **characterized in that** one or more dithiols according to Formula (I) are used in combination with one or more thiols from group (I) and/or group (II) as thiol component (A).

9. The method according to one of the preceding claims, **characterized in that** in step a), a mixture is used with the following composition:

   • 5-50 wt.%, relative to the mixture, of a thiol component (A) according to Formula (I)
   • 15-45 wt.%, relative to the mixture, of one or more thiols from group (I) and/or (II), and
   • 30-70 wt.%, relative to the mixture, of an isocyanate component (B).

10. The method according to one of the preceding claims, **characterized in that** in step a), a mixture is used with the following composition:

    • 5-50 wt.%, relative to the mixture, of one or more thiol components (A) according to Formula (I) selected from the group composed of ethane-1,2-dithiol, 2,2'-dimercaptodiethylsulfide, 1,11-dimercapto-3,6,9-trithiaundecane,
    • 15-45 wt.%, relative to the mixture, of one or more thiols from group (I) and/or (II), and
    • 30-70 wt.%, relative to the mixture, of an isocyanate component (B).

## Revendications

1. Procédé de préparation d'une résine à mouler en polyuréthane, dans lequel la préparation, en un processus en un seul stade, comporte les étapes suivantes :

   a) mélanger au moins un composant de type thiol (A) avec au moins un composant de type isocyanate (B),
   b) dégazer le mélange,
   c) et faire durcir le polymère polyuréthane,

   **caractérisé en ce que**
   le composant de type thiol (A) comprend au moins un dithiol de formule (I) :

   $$HS-[CH_2CH_2-S]_x-CH_2CH_2-SH \qquad (I)$$

   dans laquelle l'indice x vaut de 0 à 5,
   et le composant de type isocyanate (B) consiste en un ou plusieurs diisocyanate(s) choisi(s) dans l'ensemble constitué par les isophoronediisocyanate, dicyclohexyl-méthane-diisocyanate, hexaméthylène-diisocyanate, triméthyl-hexaméthylène-diisocyanate, $\alpha,\alpha,\alpha',\alpha'$-tétraméthylxylylène-diisocyanate et xylylène-diisocyanate et leurs mélanges,
   et **en ce qu'**on utilise, en tant que composant de type thiol (A), de 5 à 50 %, en poids, par rapport au mélange, d'un ou de plusieurs dithiol(s) de formule (I).

2. Procédé conforme à la revendication 1, **caractérisé en ce que** l'on utilise, en tant que composant de type thiol (A), un ou plusieurs dithiol(s) de formule (I), en combinaison avec un ou plusieurs thiol(s) de l'ensemble (I) constitué par les suivants : tétrakis(3-mercapto-propionate) de pentaérythritol, tétrakis(thioglycolate) de pentaérythritol, tris(3-mercapto-propionate) de triméthylolpropane, tris(thioglycolate) de triméthylolpropane, tétrakis(2-mercapto-propionate) de pentaérythritol, tris(2-mercapto-propionate) de triméthylolpropane, tétrakis(3-mercapto-propionate) de di(triméthylolpropane), tétrakis(thioglycolate) de di(triméthylolpropane), tétrakis(2-mercapto-propionate) de di(triméthylolpropane), hexakis(3-mercapto-propionate) de di(pentaérythritol), hexakis(thioglycolate) de di(pentaérythritol), hexakis(2-mercapto-propionate) de di(pentaérythritol), isocyanurate de tris [(3-mercapto-propionyl-oxy)-éthyle], isocyanurate de tris[(mercapto-éthyl-oxy)-éthyle], isocyanurate de tris[(2-mercapto-propionyl-oxy)-éthyle], tétrakis(4-mercapto-butyrate) de pentaérythritol, tris(4-mercapto-butyrate) de triméthylolpropane, tétrakis(3-mercapto-butyrate) de pentaérythritol, tris(3-mercapto-butyrate) de triméthylolpropane, isocyanurate de tris[(3-mercapto-butyl-oxy)-éthyle], isocyanurate de tris[(4-mercaptobutyl-oxy)-éthyle], et ester tétrakis(2-mercapto-éthylique) d'acide 2,2',2",2"'-[éthane-1,2-diylidène-tétrakis(thio)]-tétrakis(acétique) (Numéro CAS 144429-23-2).

3. Procédé conforme à l'une des revendications précédentes, **caractérisé en ce que** l'on utilise, en tant que composant de type thiol (A), un ou plusieurs dithiol(s) de formule (I), en combinaison avec un ou plusieurs thiol(s) de l'ensemble (I).

4. Procédé conforme à l'une des revendications précédentes, **caractérisé en ce que** l'on utilise, en tant que composant de type thiol (A), un ou plusieurs dithiol(s) de formule (I), en combinaison avec un ou plusieurs thiol(s) de l'ensemble (I), le thiol étant choisi parmi le tétrakis(3-mercapto-propionate) de pentaérythritol, le tris(3-mercaptopropionate) de triméthylolpropane, et le 1,1,2,2-tétrakis[(2-mercaptoéthoxy)-carbonyl-méthyl-thio]-éthane.

5. Procédé conforme à la revendication 1, **caractérisé en ce que** l'on choisit, en tant que composant de type thiol (A), un ou plusieurs dithiol(s) de formule (I), en combinaison avec un ou plusieurs thiol(s) de l'ensemble (II) constitué par les suivants : 4-(mercapto-méthyl)-1,8-dimercapto-3,6-dithia-octane, 4,8-di(mercapto-méthyl)-1,11-di-mercapto-3,6,9-trithia-undécane, tétraki s (mercapto-méthyl) -méthane, 1,1,3,3-tétrakis(mercapto-méthyl-thio)-propane, 1,1,5,5-tétrakis(mercapto-méthyl-thio)-3-thia-pentane, 1,1,6,6-tétrakis(mercapto-méthyl-thio)-3,4-dithia-hexane, 2,2-bis(mercapto-méthyl)-propane-1,3-dithiol, bis(mercapto-méthyl)-sulfure, bis(mercapto-propyl)-sulfure, bis(mercapto-méthyl-thio)-méthane, tris(mercapto-méthyl-thio)-méthane, 1,2,3-tris(mercapto-méthyl-thio)-propane, 1,2,3-tris(mercapto-éthyl-thio)-propane, tétrakis(mercapto-méthyl-thio)-méthane, tétrakis(mercapto-éthyl-thio-méthyl)-méthane, tétrakis(mercapto-propyl-thiométhyl)-méthane, 2,5-dimercapto-1,4-dithiane, et 2,5-bis(mercaptométhyl)-1,4-dithiane.

6. Procédé conforme à l'une des revendications 1 et 5, **caractérisé en ce que** l'on utilise, en tant que composant de type thiol (A), un ou plusieurs dithiol(s) de formule (I), en combinaison avec un ou plusieurs thiol(s) de l'ensemble (II), ce ou ces thiols étant du 4-(mercaptométhyl)-3,6-dithia-octane-1,8-dithiol, du 5,7-di(mercapto-méthyl)-1,11-dimercapto-3,6,9-trithia-undécane, du 4,7-di(mercapto-méthyl)-1,11-dimercapto-3,6,9-trithia-undécane, du 4,8-di(mercapto-méthyl)-1,11-dimercapto-3,6,9-trithia-undécane, ou un mélange de ceux-ci.

7. Procédé conforme à l'une des revendications 1, 5 et 6, **caractérisé en ce que** l'on utilise, en tant que composant de type thiol (A), un ou plusieurs dithiol(s) de formule (I), en combinaison avec un ou plusieurs thiol(s) de l'ensemble (II).

8. Procédé conforme à l'une des revendications précédentes, **caractérisé en ce que** l'on utilise, en tant que composant de type thiol (A), un ou plusieurs dithiol(s) de formule (I), en combinaison avec un ou plusieurs thiol(s) de l'ensemble (I) et/ou de l'ensemble (II).

9. Procédé conforme à l'une des revendications précédentes, **caractérisé en ce que** l'on utilise, dans l'étape (a), un mélange dont la composition est la suivante :

- de 5 à 50 % en poids, par rapport au mélange, d'un composant de type thiol (A) de formule (I),
- de 15 à 45 % en poids, par rapport au mélange, d'un ou de plusieurs thiol(s) de l'ensemble (I) et/ou de l'ensemble (II),
- et de 30 à 70 % en poids, par rapport au mélange, d'un composant de type isocyanate (B).

10. Procédé conforme à l'une des revendications précédentes, **caractérisé en ce que** l'on utilise, dans l'étape (a), un mélange dont la composition est la suivante :

- de 5 à 50 % en poids, par rapport au mélange, d'un ou de plusieurs composant(s) de type thiol (A) de formule (I), choisi(s) dans l'ensemble formé par l'éthane-1,2-dithiol, le 2,2'-dimercapto-diéthyl-sulfure et le 1,11-dimercapto-3,6,9-trithia-undécane,
- de 15 à 45 % en poids, par rapport au mélange, d'un ou de plusieurs thiol(s) de l'ensemble (I) et/ou de l'ensemble (II),
- et de 30 à 70 % en poids, par rapport au mélange, d'un composant de type isocyanate (B).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0378895 B1
- EP 0422836 B1
- US 20090225425 A1
- EP 1448651 B1
- WO 9829766 A